# EUROPÄISCHE PATENTSCHRIFT

(11) **EP 3 562 425 B1**
(45) Veröffentlichungstag und Bekanntmachung des Hinweises auf die Patenterteilung: **30.10.2024**
(21) Anmeldenummer: 18710028.4
(22) Anmeldetag: 07.03.2018
(51) Int. Cl.: B23C 5/10

(54) **FRÄSWERKZEUG**
MILLING TOOL
OUTIL DE FRAISAGE

(30) Priorität: 10.03.2017 DE 202017101382 U
(43) Veröffentlichungstag der Anmeldung: 06.11.2019
(73) Patentinhaber: Hptec GmbH, 88214 Ravensburg (DE)
(72) Erfinder: NETZER, Stefan, 88436 Wolfegg (DE)
(74) Vertreter: Otten, Roth, Dobler & Partner mbB Patentanwälte
(86) Internationale Anmeldenummer: PCT/EP2018/055672
(87) Internationale Veröffentlichungsnummer: WO 2018/162597

(56) Entgegenhaltungen:
- EP-A1- 2 093 003
- EP-A1- 2 589 452
- EP-A1- 2 913 132
- EP-A1- 3 100 810
- WO-A1-2016/199935
- DE-A1- 102015 105 216

## Beschreibung

Die Erfindung betrifft ein Fräswerkzeug zum Fräsen von Werkstücken nach dem Oberbegriff des Anspruchs 1. Ein solches Fräswerkzeug ist aus der EP 2 913 132 A1 bekannt.

Aus dem Stand der Technik sind verschiedene Fräswerkzeuge bekannt, welche auch eine Bearbeitung spezieller Materialien erlauben, zum Beispiel die Bearbeitung von Kunststoff bzw. zur Verwendung im Zusammenhang mit der Herstellung von Dentalwerkkörpern oder dergleichen. Um einen ausreichend großen Materialquerschnitt zur Verfügung zu stellen, ist bei einigen dieser Werkezuge die Mantelfläche des Grundkörpers im Bereich des Hauptzugs bzw. in dem Bereich, der sich in Drehrichtung sich hinter der Hauptschneide befindet, geriffelt ausgebildet. Hierdurch soll der Grundkörper zusätzlich ein hohes Maß an Stabilität erhalten.

Aufgabe der Erfindung ist es, ein Fräswerkzeug vorzuschlagen, das eine Alternative zum Stand der Technik bildet und gleichzeitig allgemein für verschiedenste technische Anwendungen verwendet werden kann.

Die Aufgabe wird durch die Merkmale des Anspruchs 1 gelöst.

Durch die in den abhängigen Ansprüchen genannten Maßnahmen sind vorteilhafte Ausführungen und Weiterbildung der Erfindung möglich.

Das erfindungsgemäße Fräswerkzeug zum Fräsen von Werkstücken umfasst zunächst einen Grundkörper sowie an seiner Kopfseite einen Fräskopf, der eine Radiusschneide aufweist, die einen kreisbogenförmigen Abschnitt beschreibt. Befindet sich das Fräswerkzeug also in Rotation um seine Drehachse, so nimmt der Fräskopf bei dieser Rotation ein halbkugelförmiges Rotationsvolumen ein. Der Winkel im Querschnitt durch die Drehachse kann von 180° abweichen, sodass die Form auch von einer Halbkugelform abweicht bzw. das Rotationsvolumen nur allgemein ein Kugelsegment ausbildet. Das Fräswerkzeug, welches um eine Drehachse drehbar ist, besitzt für die spanabhebende Bearbeitung, hier also für den Fräsvorgang, eine vorgeschriebene Drehrichtung, in der die Schneiden bei der Rotation sich auf das Material des Werkstücks zubewegen.

Der Grundkörper weist einen Hauptzug auf, der als gewendelte Vertiefung gegenüber dem durch das rotierende Fräswerkzeug eingenommen Rotationsvolumen ausgebildet ist. Dieser Hauptzug ist wiederum mit einer Schneidkante als Hauptschneide versehen. Über die gewendelte Vertiefung kann das bei der spanabhebenden Bearbeitung abgenommene Material des Werkstücks gegebenenfalls auch (wie bei einer Förderwendel) abtransportiert werden.

Dementsprechend zeichnet sich das erfindungsgemäße Fräswerkzeug dadurch aus, dass der Hauptzug eine auf der in Drehrichtung der Hauptschneide abgewandten Seite angeordnete glatte Mantelfläche besitzt. Überraschenderweise hat sich herausgestellt, dass ein derartiges Werkzeug gemäß der Erfindung nicht nur kostengünstig gefertigt werden kann, weil keine zusätzlichen Erhebungen und Vertiefungen in die Mantelfläche eingearbeitet werden müssen, sondern dieses Werkzeug auch über eine sehr gute Festigkeit und Stabilität verfügt. Die glatte Oberfläche bietet auch dann, wenn das Fräswerkzeug vergleichsweise weit in das Material des Werkstücks eingedrungen ist, einen sehr geringen Reibungswiderstand, insoweit der Grundkörper überhaupt mit dem Werkstück in Verbindung kommt. Aufgrund dieser Eigenschaften ist das erfindungsgemäße Fräswerkzeug grundsätzlich auch für verschiedenste technische Einsatzbereiche verwendbar, unter anderem etwa für die Bearbeitung von:
- Kunststoffen, z.B. von PMMA
- Leichtmetallen, etwa von Aluminium, aber auch von Kupfer oder Messing
- Mineralien wie Zirkon (vor allem hydrostatisch gepresstem statt gesintertem Material) sowie Keramiken (vor allem nicht gebrannten)
- Werkstoffen in der Dental- und sonstiger Medizintechnik.

Bei einer vorteilhaften Ausführungsform der Erfindung geht die Radiusschneide in die Hauptschneide über. Auf diese Art und Weise setzt die spanabhebende Bearbeitung auch bei tiefem Eindringen des Werkzeugs in das Material stetig bei der Rotation zur gleichen Zeit am gleichen Ort an, sodass eine kontinuierlichere Bearbeitung ohne Verkanten der Schneide erreicht wird und auch der Material-Abtransport über die gewendelte Vertiefung erleichtert werden kann. Der Übergang zwischen Radiusschneide und Hauptschneide kann, muss aber nicht unbedingt einen glatten Verlauf aufweisen.

Des Weiteren sind grundsätzlich zwei Ausführungsvarianten denkbar, nämlich ein Fräswerkzeug mit einer Mantelfläche, die parallel zur Drehachse verläuft, oder ein Fräswerkzeug, bei dem die Mantelfläche zur Drehachse geneigt ist. Verläuft die Mantelfläche parallel zur Drehachse, kann durch diese Maßnahme ein Werkzeug bereitgestellt werden, das in Rotation bzw. dessen Rotationsvolumen eine möglichst zylindrische Form besitzt. Der Grundkörper kann also bei seitlichem Anfahren des Werkstücks eine ebene Bearbeitung parallel zur Drehachse ausführen. Muss das Fräswerkzeug tief in ein Material eindringen, so ändert sich bei dieser Ausführungsform der Querschnitt bzw. die Querschnittsfläche nicht. Bei einer zur Drehachse geneigten Mantelfläche kann diese insbesondere konisch mit zum Fräskopf hin abnehmender (bzw. zum Schaft hin zunehmender) Querschnittsfläche versehen sein. Die Querschnittsfläche wird bei dieser Ausführungsform also zu der Seite hin größer, auf der das Werkzeug in einen Werkzeughalter einer Werkzeugmaschine eingespannt ist. Auf diese Weise kann das Fräswerkzeug eine höhere Stabilität erhalten. Eine solche strukturelle Maßnahme kann insbesondere dann von Vorteil sein, wenn bei der für das Fräswerkzeug vorgesehenen Bearbeitungsweise hauptsächlich der Fräskopf, also die "Spitze" des Werkzeugs zum Einsatz kommt, d.h. der Fräskopf allein mit dem Werkstück in Kontakt steht, wobei auch bei härteren Materialien des Werkstücks ein ruhiger Lauf des gut stabilisierten Fräswerkzeugs und somit eine gleichmäßige, präzise Bearbeitung des Werkstücks ermöglicht wird. Vorzugsweise schließt die Mantelfläche mit der Drehachse dabei einen Winkel zwischen 0° und maximal einschließlich 20° ein.

Auch kann bei einer Ausführungsform der Erfindung die Hauptschneid abschnittsweise oder vollständig auf der Mantelfläche eines Zylinders liegen.

Ferner kann bei einem Ausführungsbeispiel der Erfindung die Oberfläche des Rotationsvolumens des Fräswerkzeugs zur Drehachse geneigt sein. Dies ist grundsätzlich auch der Fall, wenn die Mantelfläche des Grundkörpers bereits zur Drehachse geneigt ist. Die Hauptschneide ist regelmäßig von der eigentlichen Mantelfläche abgehoben, d.h. wenn die Hauptschneide radial weiter von der Drehachse beabstandet ist als die Mantelfläche und ihre Außenkontur somit bei der Rotation des Fräswerkzeugs die Einhüllende, also das Rotationsvolumen bestimmt. Auch hier können vorzugsweise Winkel zwischen 0° und maximal 20° vorgesehen sein. Durch das Absetzen der Hauptschneide kann aber auch der Reibungswiderstand bei tiefem Eindringen in das Material grundsätzlich verringert werden.

In Drehrichtung hinter der Radiusschneide können Freiflächen und/oder Freischliffe vorgesehen sein. Diese Freischliffe können den Materialabtransport des abgenommenen Materials aus dem Werkstück erleichtern und zudem den Widerstand beim Eindringen der Schneide in das Material verringern. Die Anordnung der Freischliffe kann wiederum gestuft erfolgen. Zum Beispiel können hinter der Radiusschneide wenigstens zwei insbesondere drei Freischliffe angeordnet werden. Diese Freischliffe können jeweils wiederum verschiedene Winkel zur Rotationsrichtung bzw. zur Rotationsbahn an der entsprechenden Stelle einnehmen. Sie ermöglichen insbesondere einen gestuften Verlauf bei der Rotation des Werkzeugs. Der aus dem Werkstück ausgeschnittene Abschnitt kann noch präziser die durch die Radiusschneide bedingte Kugelform erhalten.

Die Freischliffe können bei unterschiedlichen Ausführungsvarianten der Erfindung eben bzw. mit gewölbter Oberfläche verlaufen; die Wölbung kann insbesondere von der Oberfläche weg erfolgen. Während gewölbte Oberfläche einen möglichst gleichmäßigen Übergang ermöglicht, kann durch eine ebene Fläche des Freischliffs möglichst viel Platz für den Materialabtransport geschaffen werden.

Freiflächen bzw. deren Konturlinien können grundsätzlich parallel zur Radiusschneide und/oder zur Hauptschneide verlaufen.

Einer Weiterbildung der Erfindung kann die Radiusschneide in einem glatten Verlauf in die Hauptschneide übergehen. Bei einem glatten Übergang kann also auch dann, wenn das Werkzeug tief in das Werkstück eindringt ein kontinuierlicher Übergang zwischen einer Bearbeitung durch den Fräskopf und einer weiteren Bearbeitung durch den Grundkörper erreicht werden.

Im Übrigen kann der Fräskopf vom Grundkörper aber auch durch einen Freistich abgesetzt sein. Bei einem derartigen Ausführungsbeispiel der Erfindung wird auch dann, wenn das Fräswerkzeug über den Fräskopf hinaus mit dem Grundkörper in das Material eindringt, der an den Fräskopf angrenzende Teil des Grundkörpers zunächst nicht zur Bearbeitung beitragen. Eine solche Ausführung kann sich dann anbieten, wenn zum Beispiel hauptsächlich der Fräskopf zur Bearbeitung eingesetzt wird. Hierdurch kann auch der Bearbeitungswiderstand gering gehalten werden. Außerdem kann/können auch der Grundkörper vom Schaft und/oder die Hauptschneide vom Grundkörper durch einen Freistich abgesetzt sein.

Auch dann, wenn die Mantelfläche gegenüber der Drehachse geneigt ist, kann sich bei einer Weiterbildung der Erfindung an den Abschnitt des Grundkörpers, der in dieser Weise konisch zugeschnitten ist, ein zylindrischer Abschnitt anschließen. Insbesondere kann der Hauptzug vor dem zylindrischen Abschnitt enden oder in den zylindrischen Abschnitt übergehen. Wenn der Hauptzug vor diesem zylindrischen Abschnitt endet, kann er grundsätzlich in den Abschnitt zur Werkzeughalterung, den Bereich des Schaftes, übergehen. Die Art der Formgebung hängt insbesondere von der gewünschten Bearbeitung ab. Ist in den zylindrischen Abschnitt noch ein Teil des Hauptzugs integriert, so kann auch dieser Teil zur spanabhebenden Bearbeitung genutzt werden. Insgesamt kann das Werkzeug in dem zylindrischen Abschnitt schlanker gehalten werden.

Bezüglich der Radiusschneide sind verschiedene Weiterbildungen der Erfindung denkbar. Zum einen kann bei einer Variante der Erfindung die Radiusschneide in Vorschubrichtung den höchsten Punkt ausbilden, also gewissermaßen wie eine Spitze des Fräswerkzeugs erscheinen. Dadurch, dass die Radiusschneide insgesamt auch im Bereich des Fräskopfes von einer Seite der Drehachse zur anderen die Außenkontur des Rotationsvolumens bildet, kann umso präziser ein kugelförmiger Bereich aus dem Werkstück ausgeschnitten werden.

Eine weitere Ausführungsvariante betrifft die Anordnung der Radiusschneide in Draufsicht auf den Fräskopf entlang der Drehachse. Ist nämlich die Radiusschneide gegenüber einer Ebene, welche die Drehachse beinhaltet, versetzt angeordnet, so kann diese auch in Bereichen nahe der Drehachse eine größere Kraft bzw. ein größeres Drehmoment auf das zu bearbeitende Material ausüben. Der mittlere Abschnitt der Schneide um die Drehachse herum im Bereich der Spitze des Werkzeugs sorgt dafür, dass keine Erhebung in der Mitte bzw. im Zentrum (Zapfen) des bearbeiteten Werkstücks stehen bleibt. Vorzugsweise kann die Radiusschneide entgegen der Vorschubrichtung seitlich gegenüber einer Symmetrieachse der durch das rotierende Fräswerkzeug eingenommenen Rotationsfläche versetzt sein. Insbesondere kann sie in ihrem Verlauf zum Beispiel so angeordnet sein, dass sie wenigstens einmal zwei senkrecht zueinander verlaufende Symmetrieachsen der durch das rotierende Fräswerkzeug eingenommen Rotationsfläche schneidet. Auf diese Weise kann eine effektivere Bearbeitung erfolgen.

Es wurde bereits dargelegt, dass sich Ausführungsbeispiele der Erfindung für verschiedene Anwendungsbereiche eignen. In der Regel ist das Fräswerkzeug zum Beispiel aus Vollhartmetall gefertigt. In vorteilhafter Weise kann das Fräswerkzeug bei einem Ausführungsbeispiel eine Beschichtung aufweisen, z.B. eine Kohlenstoffbeschichtung wie zum Beispiel mit Diamant. Hierdurch kann die Spanbildung verbessert und die Stabilität des Werkzeugs erhöht werden.

### Ausführungsbeispiel:

Ein Ausführungsbeispiel der Erfindung ist in den Zeichnungen dargestellt und wird nachstehend unter Angabe weiterer Einzelheiten und Vorteile näher erläutert. Im Einzelnen zeigen:
- Figur 1:: eine Seitenansicht eines Fräswerkzeugs gemäß der Erfindung, sowie
- Figur 2:: eine Draufsicht entlang der Drehachse auf den Fräskopf des Fräswerkzeugs aus Fig. 1 entgegen der Vorschubrichtung.

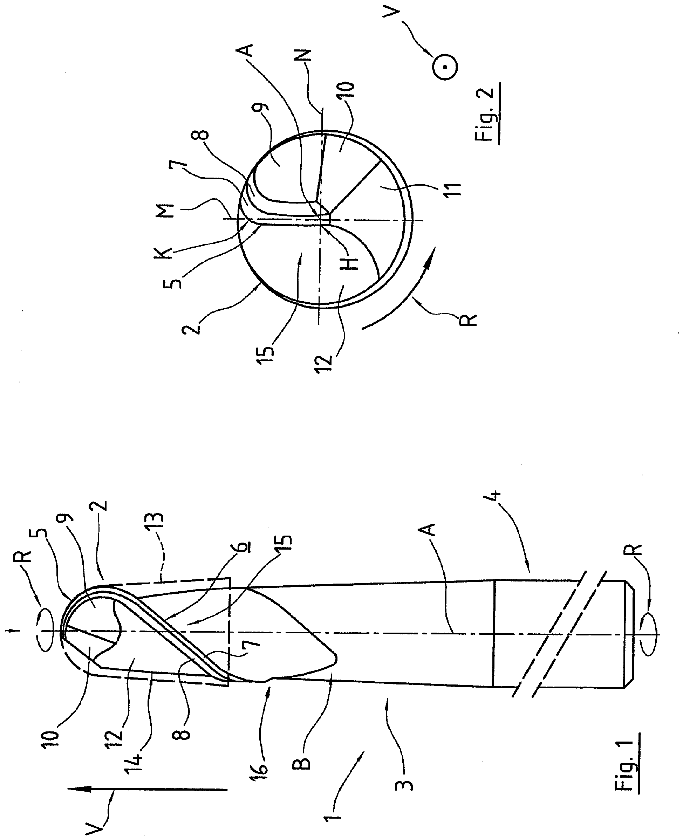

Figur 1 zeigt ein Fräswerkzeug 1 mit einem Fräskopf 2, einem Grundkörper 3 und einem zylindrischen Abschnitt als Schaft 4. Am Fräskopf 2 befindet sich eine Radiusschneide 5, die im Bereich des Grundkörpers 3 in eine Hauptschneide 6 des Hauptzugs übergeht. Sowohl die Radiusschneide 5 als auch die Hauptschneide 6 werden begleitet von jeweils zwei Freiflächen 7, 8, die parallel zu den jeweiligen Schneiden 5, 6 verlaufen. In Drehrichtung R hinter der Radiusschneide 5 sind zudem drei Freischliffe 9, 10 ,11 angeordnet, deren Oberflächen zum Teil eben oder von der Drehachse A weg gekrümmt sind. Das Fräswerkzeug 1 weist somit beim Kontakt mit einem Werkstück im Bereich des Fräskopfes 2 eine geringere Reibung im an die Radiusschneide 5 angrenzenden Bereich auf.

In Drehrichtung R hinter der Radiusschneide 5 und den Freiflächen 7, 8 befindet sich die Mantelfläche 12, die glatt ausgebildet ist. Die Mantelfläche 12 ist in ihrem Abstand zur Drehachse A hinter den Schneiden 5, 6 zurückgesetzt, liegt also näher an der Drehachse A als die Schneiden 5,6. Das Rotationsvolumen 13 wird also hinsichtlich seiner äußeren Grenzen bzw. seiner Oberfläche durch den Verlauf der Schneiden 5, 6 bestimmt. Im Bereich des Fräskopfs 2 kann daher ein halbkugelförmiger Bereich von dem zu bearbeitenden Werkstück abgenommen werden. Die Außenkante 14 der Mantelfläche 12 verläuft geneigt zur Drehachse A, wobei sich die Querschnittsfläche des Fräswerkzeugs 1, wie auch an dem Körper des Rotationsvolumens 13 erkennbar ist, zum Schaft 4 hin vergrößert.

Der Hauptzug bzw. die Hauptschneide 6 durchziehen aber nicht den gesamten Grundkörper 3, sondern enden am Punkt B. Der restliche Bereich des Grundkörpers 3, der unterhalb des Punktes B zum Schaft 4 hin liegt, ist glatt ausgebildet. Der Hauptzug bzw. die Hauptschneide 6 enden in Figur 1 oberhalb des Punktes B zum Fräskopf 2 hin bzw. im dem Schaft 4 abgewandten Teil des Grundkörpers 3.

Der Hauptzug besitzt eine Ausnehmung 15 unterhalb der Schneide 6, die zum Abtransport abgehobener Späne bzw. abgetragenen Materials aus dem zu bearbeitenden Werkstück dient.

Figur 2 zeigt das gleiche Fräswerkzeug 1 in Draufsicht mit Blickrichtung entlang der Drehachse A, und zwar entgegen der Vorschubrichtung V. Befindet sich das Fräswerkzeug 1 in Rotation, trifft zunächst die Radiusschneide 5 auf das Werkstück. Bei weiterer Drehung des Fräswerkzeugs 1 folgen anschließend die Freiflächen 7, 8 und dann die drei Freischliffe 9, 10, 11.

Senkrecht zur Drehachse A verlaufen zwei Achsen M, N, welche jeweils die Drehachse A schneiden. Die Achsen M und N verlaufen wiederum senkrecht zueinander. Hinsichtlich des Rotationsvolumens des Fräswerkzeugs 1 bilden die Achsen M, N jeweils Symmetrieachsen. Die Radiusschneide 5 ist in ihrem oberen (dem Schaft 4 abgewandten) Bereich, seitlich (in Figur 2 nach links) versetzt zur Mittenachse M angeordnet, sodass eine größere Kraftwirkung bzw. ein größeres Drehmoment auf das Werkstück ausgeübt werden kann, da durch den Versatz zur Mittenachse M bzw. zur Drehachse A ein größerer Hebel wirken kann. Den höchsten Punkt H in Vorschubrichtung V erreicht die kreisbogenförmig ausgebildete Radiusschneide am Schnittpunkt mit der Mittenachse N; anschließend verläuft die Radiusschneide 5 entgegen der Vorschubrichtung V zum Freischliff 11 hin. Die Mittenachse M wird aufgrund dieser Anordnung erst im weiteren Verlauf zum Übergang in die Hauptschneide 6 hin im Punkt K von der Radiusschneide 5 geschnitten.

Die Hauptschneide 6 ist in ihrem Verlauf durch einen Freistich im Endbereich des Hauptzugs leicht vom Grundkörper 3 abgesetzt. Auf diese Weise ist der eigentliche Schneidbereich noch stärker vom restlichen Bereich des Fräswerkzeugs 1 abgesetzt bzw. räumlich getrennt.

Allen Ausführungsbeispielen und Weiterbildungen der Erfindung ist gemeinsam, dass der Hauptzug eine auf der in Drehrichtung der Hauptschneide abgewandten Seite angeordnete glatte Mantelfläche aufweist.

### Bezugszeichenliste:

- 1: Fräswerkzeug
- 2: Fräskopf
- 3: Grundkörper
- 4: Schaft
- 5: Radiusschneide
- 6: Hauptschneide
- 7: Freifläche
- 8: Freifläche
- 9: Freischliff
- 10: Freischliff
- 11: Freischliff
- 12: Mantelfläche
- 13: Rotationsvolumen
- 14: Außenkante
- 15: Ausnehmung
- 16: Freistich

- A: Drehachse
- B: Endpunkt des Hauptzugs
- K: Schnittpunkt
- M: Symmetrieachse
- N: Symmetrieachse
- R: Drehrichtung
- V: Vorschubrichtung

## Patentansprüche

1. Fräswerkzeug (1) zum Fräsen und/oder Bohren von Werkstücken, das um eine Drehachse (A) in einer Drehrichtung (R) bei der spanabhebenden Bearbeitung drehbar ist, umfassend:
- einen Fräskopf (2), der eine Radiusschneide (5) aufweist, die einen kreisbogenförmigen Abschnitt beschreibt, sodass der Fräskopf (2) in Rotation ein abschnittsweise kugelförmiges, insbesondere ein halbkugelförmiges Volumen einnimmt,
- einen Grundkörper (3), der einen Hauptzug als eine gewendelte Vertiefung gegenüber dem durch das rotierende Fräswerkzeug (1) eingenommenen Rotationsvolumen zur Ausbildung einer Förderwendel aufweist, wobei der Hauptzug mit einer Schneidkante als Hauptschneide (6) versehen ist,
- **dadurch gekennzeichnet, dass** der Hauptzug eine auf der in Drehrichtung (R) der Hauptschneide (6) abgewandten Seite angeordnete glatte Mantelfläche (12) aufweist.

2. Fräswerkzeug (1) nach einem der vorgenannten Ansprüche, **dadurch gekennzeichnet, dass** die Radiusschneide (5) in die Hauptschneide (6) übergeht.

3. Fräswerkzeug nach einem der vorgenannten Ansprüche, **dadurch gekennzeichnet, dass** die Mantelfläche parallel zur Drehachse und/oder dass die Hauptschneide wenigstens abschnittsweise, insbesondere vollständig auf der Mantelfläche eines Zylinders verläuft.

4. Fräswerkzeug (1) nach einem der vorgenannten Ansprüche, **dadurch gekennzeichnet, dass** die Mantelfläche (12) zur Drehachse (A) geneigt verläuft, insbesondere konisch mit zum Fräskopf (2) hin abnehmendem Querschnitt, wobei die Mantelfläche (12) mit der Drehachse (A) vorzugsweise einen Winkel zwischen 0° und maximal einschließlich 20° einschließt.

5. Fräswerkzeug (1) nach einem der vorgenannten Ansprüche, **dadurch gekennzeichnet, dass** die Oberfläche des durch das rotierende Fräswerkzeug (1) eingenommenen Rotationsvolumens zur Drehachse (A) geneigt ist, vorzugsweise parallel zur Mantelfläche (12) verläuft, insbesondere mit der Drehachse (A) vorzugsweise einen Winkel zwischen 0° und maximal einschließlich 20° einschließt.

6. Fräswerkzeug (1) nach einem der vorgenannten Ansprüche, **dadurch gekennzeichnet, dass** in Drehrichtung (R) hinter der Hauptschneide (6) und/oder der Radiusschneide (5) wenigstens eine, vorzugsweise zwei Freiflächen (7, 8) angeordnet sind.

7. Fräswerkzeug (1) nach einem der vorgenannten Ansprüche, **dadurch gekennzeichnet, dass** in Drehrichtung (R) hinter der Radiusschneide (5) wenigstens zwei, insbesondere drei Freischliffe (9, 10, 11) angeordnet sind.

8. Fräswerkzeug (1) nach einem der vorgenannten Ansprüche, **dadurch gekennzeichnet, dass** wenigstens einer der Freischliffe (9, 10, 11) eine ebene und/oder eine von der Drehachse weg gewölbte Oberfläche aufweist.

9. Fräswerkzeug (1) nach einem der vorgenannten Ansprüche, **dadurch gekennzeichnet, dass** die Radiusschneide (5) in einem glatten Verlauf in die Hauptschneide (6) übergeht.

10. Fräswerkzeug (1) nach einem der vorgenannten Ansprüche, **dadurch gekennzeichnet, dass** der Fräskopf vom Grundkörper und/oder der Grundkörper vom Schaft und/oder die Hauptschneide (6) vom Grundkörper durch einen Freistich (16) abgesetzt ist.

11. Fräswerkzeug (1) nach einem der vorgenannten Ansprüche, **dadurch gekennzeichnet, dass** sich an den Abschnitt des Grundkörpers (3), der eine konisch verlaufende Mantelfläche (12) aufweist, ein zylindrischer Abschnitt (4) anschließt und der Hauptzug vor dem zylindrischen Abschnitt endet oder in den zylindrischen Abschnitt übergeht.

## Claims

1. Milling tool (1) for milling and/or drilling workpieces, which is rotatable in a direction of rotation (R) about an axis of rotation (A) during machining, comprising:
- a milling head (2), which has a radius cutter (5) that describes a portion in the form of a circular arc such that the milling head (2) takes up a partially spherical, in particular a hemispherical volume, in rotation,
- a main body (3), which has a main feature in the form of a helical recess with respect to the rotation volume taken up by the rotating milling tool (1) in order to form a conveying helix, wherein the main feature is provided with a cutting edge as main cutter (6),
- **characterized in that** the main feature has a smooth lateral surface (12) arranged on the side facing away from the main cutter (6) in the direction of rotation (R).

2. Milling tool (1) according to one of the preceding claims, **characterized in that** the radius cutter (5) transitions into the main cutter (6).

3. Milling tool according to either of the preceding claims, **characterized in that** the lateral surface extends parallel to the axis of rotation, and/or **in that** the main cutter extends at least partially, in particular entirely on the lateral surface of a cylinder.

4. Milling tool (1) according to one of the preceding claims, **characterized in that** the lateral surface (12) extends in an inclined manner with respect to the axis of rotation (A), in particular conically with a decreasing cross section toward the milling head (2), wherein the lateral surface (12) encloses preferably an angle of between 0° and at most 20°, inclusive, with the axis of rotation (A).

5. Milling tool (1) according to one of the preceding claims, **characterized in that** the surface of the rotation volume taken up by the rotating milling tool (1) is inclined with respect to the axis of rotation (A), preferably extends parallel to the lateral surface (12), in particular encloses preferably an angle of between 0° and at most 20°, inclusive, with the axis of rotation (A).

6. Milling tool (1) according to one of the preceding claims, **characterized in that** at least one, preferably two flanks (7, 8) are arranged behind the main cutter (6) and/or the radius cutter (5) in the direction of rotation (R).

7. Milling tool (1) according to one of the preceding claims, **characterized in that** at least two, in particular three chip spaces (9, 10, 11) are arranged behind the radius cutter (5) in the direction of rotation (R).

8. Milling tool (1) according to one of the preceding claims, **characterized in that** at least one of the chip spaces (9, 10, 11) has a planar surface and/or a surface that is curved away from the axis of rotation.

9. Milling tool (1) according to one of the preceding claims, **characterized in that** the radius cutter (5) transitions into the main cutter (6) with a smooth profile.

10. Milling tool (1) according to one of the preceding claims, **characterized in that** the milling head stands proud of the main body and/or the main body stands proud of the shank and/or the main cutter (6) stands proud of the main body by an undercut (16).

11. Milling tool (1) according to one of the preceding claims, **characterized in that** the portion of the main body (3) that has a conically extending lateral surface (12) is adjoined by a cylindrical portion (4), and the main feature ends in front of the cylindrical portion or transitions into the cylindrical portion.

## Revendications

1. Outil de fraisage (1) pour fraiser et/ou percer des pièces à traiter, qui est apte à tourner autour d'un axe de rotation (A) dans un sens de rotation (R) lors de l'usinage par enlèvement de copeaux, comprenant :
- une tête de fraisage (2) qui présente une arête de coupe rayonnée (5) qui décrit une section en arc de cercle, de sorte que la tête de fraisage (2) occupe en rotation un volume en forme de portion sphérique, en particulier en forme de demi-sphère,
- un corps de base (3), qui présente un filet principal sous la forme d'un creux hélicoïdal par rapport au volume de rotation occupé par l'outil de fraisage (1) rotatif pour former une hélice de transport, le filet principal étant pourvu d'une arête de coupe en tant qu'arête de coupe principale (6),
- **caractérisé en ce que** le filet principal présente une surface d'enveloppe (12) lisse disposée sur le côté opposé à l'arête de coupe principale (6) dans le sens de rotation (R).

2. Outil de fraisage (1) selon l'une des revendications précédentes, **caractérisé en ce que** l'arête de coupe radiale (5) se prolonge par l'arête de coupe principale (6) .

3. Outil de fraisage selon l'une des revendications précédentes, **caractérisé en ce que** la surface d'enveloppe est parallèle à l'axe de rotation et/ou **en ce que** l'arête de coupe principale s'étend au moins partiellement, en particulier entièrement, sur la surface d'enveloppe d'un cylindre.

4. Outil de fraisage (1) selon l'une des revendications précédentes, **caractérisé en ce que** la surface d'enveloppe (12) s'étend de manière inclinée par rapport à l'axe de rotation (A), en particulier de manière conique avec une section transversale décroissante en direction de la tête de fraisage (2), la surface d'enveloppe (12) formant de préférence avec l'axe de rotation (A) un angle compris entre 0° et 20° maximum inclus.

5. Outil de fraisage (1) selon l'une des revendications précédentes, **caractérisé en ce que** la surface du volume de rotation occupé par l'outil de fraisage (1) en rotation est inclinée par rapport à l'axe de rotation (A), s'étend de préférence parallèlement à la surface d'enveloppe (12), en particulier forme avec l'axe de rotation (A) de préférence un angle compris entre 0° et 20° maximum inclus.

6. Outil de fraisage (1) selon l'une des revendications précédentes, **caractérisé en ce qu'**au moins une surface, de préférence deux surfaces, de dépouille (7, 8) est/sont aménagées en arrière de l'arête de coupe principale (6) et/ou l'arête de coupe radiale (5) dans le sens de rotation (R).

7. Outil de fraisage (1) selon l'une des revendications précédentes, **caractérisé en ce que**, dans le sens de rotation (R), au moins deux, en particulier trois, dépouilles (9, 10, 11) sont aménagées en arrière de l'arête de coupe radiale (5).

8. Outil de fraisage (1) selon l'une des revendications précédentes, **caractérisé en ce qu'**au moins une des dépouilles (9, 10, 11) présente une surface plane et/ou une surface bombée s'éloignant de l'axe de rotation.

9. Outil de fraisage (1) selon l'une des revendications précédentes, **caractérisé en ce que** l'arête de coupe radiale (5) évolue en arête de coupe principale (6) selon un tracé lisse.

10. Outil de fraisage (1) selon l'une des revendications précédentes, **caractérisé en ce que** la tête de fraisage est séparée du corps de base et/ou le corps de base est séparé de la tige et/ou l'arête de coupe principale (6) est séparée du corps de base par une contre-dépouille (16).

11. Outil de fraisage (1) selon l'une des revendications précédentes, **caractérisé en ce qu'**une section cylindrique (4) se raccorde à la section du corps de base (3) qui présente une surface d'enveloppe (12) s'étendant de manière conique, et **en ce que** le filet principal se termine avant la section cylindrique ou se fond dans la section cylindrique.
